# EUROPEAN PATENT SPECIFICATION

(11) **EP 1 610 973 B1**
(45) Date of publication and mention of the grant of the patent: **09.09.2009**
(21) Application number: 04726543.4
(22) Date of filing: 08.04.2004
(51) Int. Cl.: B60N 2/12

(54) **VEHICLE SEAT ASSEMBLY**
FAHRZEUGSITZ
ENSEMBLE DE SIEGE DE VEHICULE

(30) Priority: 10.04.2003 GB 0308280
(43) Date of publication of application: 04.01.2006
(73) Proprietor: Johnson Controls Automotive (UK) Ltd, Chelmsford Essex CM1 3BY (GB)
(72) Inventor: ISHERWOOD, Christopher, Matthew, Kidderminster DY10 2DT (GB); SHORTHOUSE, Andrew, David, Bescot, Walsall WS2 9DP (GB); MOORE, Simon, Whitchurch, Shropshire SY13 4DF (GB)
(74) Representative: Marshall, Caroline
(86) International application number: PCT/GB2004/001542
(87) International publication number: WO 2004/089683

(56) References cited:
- WO-A-02/40310
- DE-A- 19 509 344
- US-A- 4 844 542
- US-A- 4 936 535

## Description

The present invention relates to a vehicle seat assembly and, in particular, to a motor vehicle seat assembly, which includes a memory device for memorising a longitudinal position of the seat.

In motor vehicles having two access doors, it is a common practice to mount each front seat of the vehicle on a pair of rails which enable the seat to be slid in a forwards direction to gain easier access to the rear seats of the vehicle. The back of the front seat is normally tilted forward at the same time, and the combined action for providing easier access to the rear seats is commonly referred to as a tilt and slide action.

After a tilt and slide action has been performed, it is desirable for the front seat to be returned to its initial, longitudinal, position along the rails, and thereby avoid the need for an adjustment operation by an occupant of the front seat.

It has therefore been previously proposed to provide vehicle seats with a memory device which is able to "memorise" the longitudinal position of a seat, prior to a tilt and slide action, so that the seat can be conveniently returned to its "memorised" longitudinal position. An example of such a vehicle seat is disclosed in US 5,873,629.
US 4,844,542 describes a vehicle seat assembly having a memory means. One drawback with the US 4,844,542 arrangement is that a user cannot lock the seat in a longitudinal position if movement of the seat assembly to a previously set memory position is impeded.

A general aim of the present invention is to provide a vehicle seat having a memory device for memorising the longitudinal position of the vehicle seat, which is an improvement over known vehicle seats.

According to the present invention there is provided a vehicle seat assembly including a seat slidably connected to at least one rail for longitudinal movement along the rail between a rearwardmost position and a forwardmost position, the seat having a seat cushion and a seat back which is pivotally movable relative to the seat cushion from a seat occupancy position to a forwardly tilted position, a rail latching mechanism mounted on the seat cushion for co-operation with the rail in order to latchingly locate the seat at a selected desired longitudinal position along the rail, and a rail tracking mechanism mounted on the seat cushion for co-operation with the rail to track the longitudinal displacement of the seat along the rail from a pre-selected desired longitudinal position of the seat on the rail, the latching mechanism including latch means engageable with the rail to latch the seat in said selected desired longitudinal position, the latch means being operably connected to the seat back to selectively engage and disengage the latch means from the rail on movement of the seat back between its seat occupancy position and its forwardly tilted position regardless of the longitudinal position of the seat, movement of the seat back from its seat occupancy position to its forwardly tilted position disengaging the latch means from the rail so as to enable the seat to be longitudinally moved forwardly from the pre-selected longitudinal position to a temporary forward longitudinal position, the tracking mechanism including a drive member in driving engagement with the rail so as to be driven by forward and rearward longitudinal displacement of the seat between its pre-selected and temporary forward longitudinal positions, and a release mechanism mounted on the seat cushion which is movable from a normal operable position to a release position, the release mechanism when in its normal operable position acting to maintain driving engagement between the drive member and the rail and also maintain said latch means in engagement with the rail until actuated to disengage by movement of said seat back, the release member when moved to its release position acting to simultaneously disengage the latch means from the rail to enable the seat to be longitudinally moved to a new pre-selected desired longitudinal position and disengage the drive member from the rail to re-set the tracking mechanism for memorising the new pre-selected desired longitudinal position of the seat.

Further features of the invention are disclosed in the dependent claims.

Various aspect of the present invention are hereinafter described, by way of non-limiting examples, with reference to the accompanying drawings in which:
Figure 1 is an exploded perspective view of an embodiment of the present invention;
Figure 2 is a schematic cross-sectional view taken along the line II-II in Figure 1; and
Figures 3a-3g are diagrammatic views showing the embodiment of Figures 1 and 2 in different operational conditions.

A vehicle seat assembly 10 according to an embodiment of the present invention includes a vehicle seat 12 having a seat cushion 14 hingedly connected to a seat back 16.

The seat back 16 is movable about the hinge connection, from a seat occupancy position P_{N} to a forwardly tilted position P_{T}, to enable a tilt and slide action to be performed.

The seat occupancy position P_{N} may be one of several reclined positions.

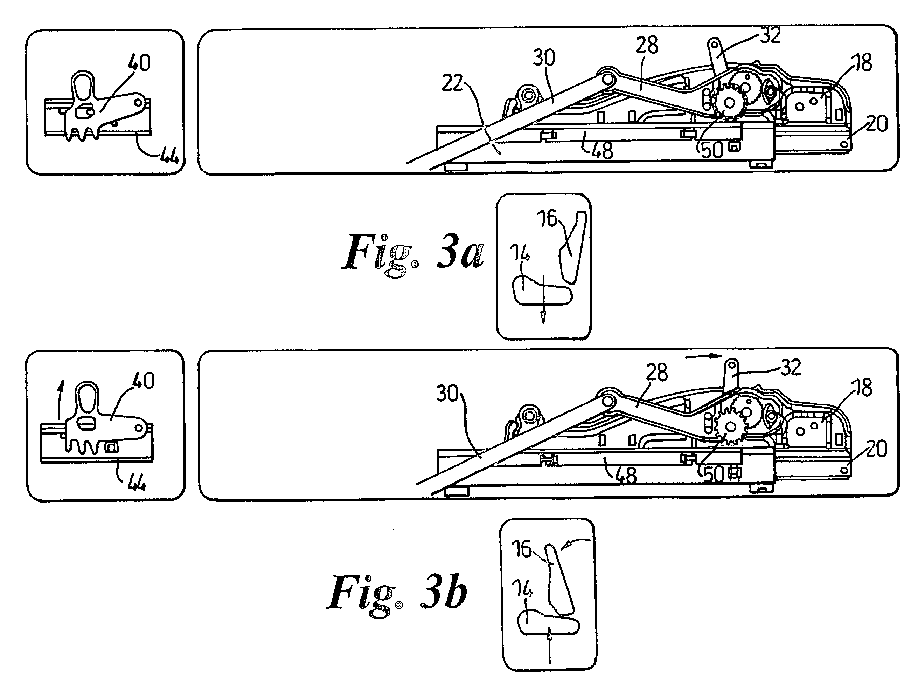

On opposite sides of the seat cushion 14 there is provided a mounting plate 18 (only one is shown in the drawings) which carries an elongate slide member 20 (Figures 3a-3g).

Each slide member 20 is slidably carried in a rail 22 which, in use, is fixed to the floor of a vehicle. Accordingly, the vehicle seat 12 is able to slide longitudinally along the rails 22 between a rearwardmost position P_{R} and a forwardmost position P_{F}.

The vehicle seat assembly 10 includes a rail latching mechanism 24 which serves to latchingly hold the vehicle seat 12 in any one of a plurality of pre-selected longitudinal positions along the rails 22, inbetween and including positions P_{R} and P_{F}.

The rail latching mechanism 24 preferably includes, on each side of the seat 12, a bell-crank type lever 26 which is pivotally mounted on a main lever 28 which is provided with a forwardly extending handle 30.

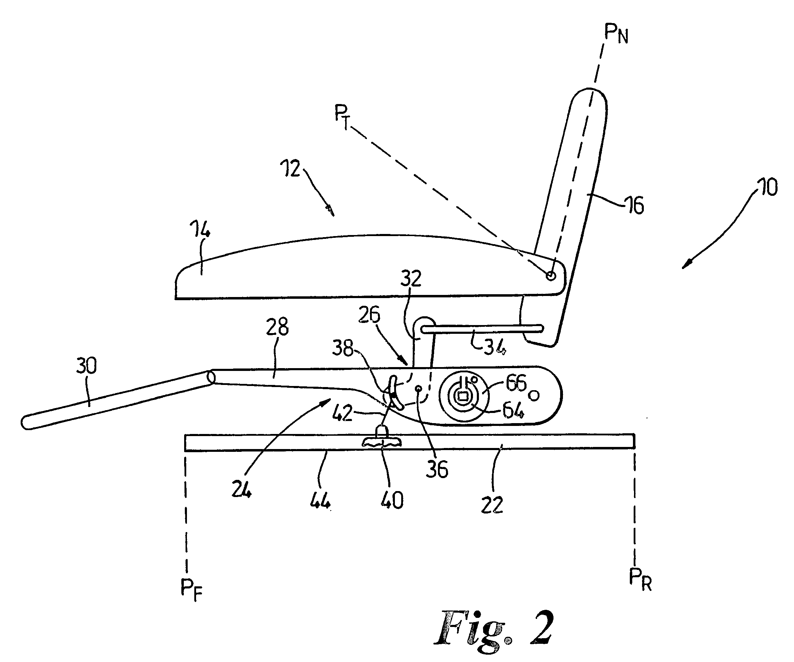

The lever 26 includes a drive arm 32 which is preferably connected to the seat back 16, by a link 34, such that movement of the seat back 16 towards its tilted position P_{T} causes the lever 26 to rotate about its pivot 36 in a clockwise direction (as viewed in Figure 2).

Lever 26 includes a driven arm 38 which is preferably connected to a latch member 40 via a link 42. The latch member 40 is preferably pivotally mounted on the slide member 20, and is preferably resiliently biased into contact with the bottom wall 44 of the rail 22. The bottom wall 44 of the rail 22 and latch member 40 preferably have co-operating latch formations (such as projections and recesses) which, in the biased position of the latch member 40, interengage to prevent relative longitudinal movement between the slide member 20 and the rail 22.

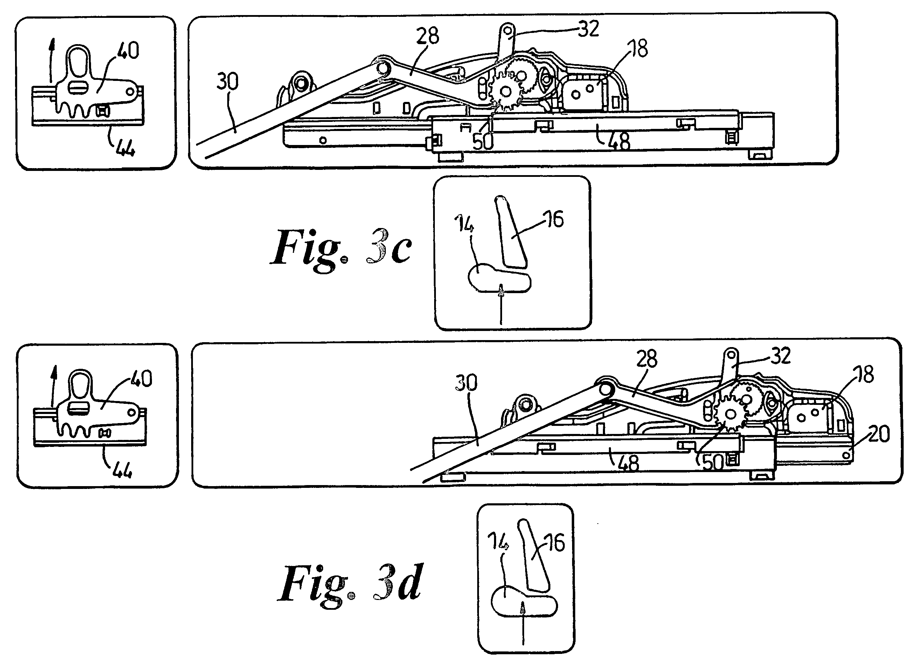

When lever 26 is rotated, by tilting of the seat back 16 to its tilted position P_{T}, driven arm 38 acts to disengage the latch member 40 from the bottom wall 44 of rail 22, and so permits the slide member 20 to be moved longitudinally along the rail 22 (Figures 3b and 3c).

In addition, since the lever 26 is pivotally mounted on main lever 28, it will be appreciated that disengagement of the latch member 40 from the bottom wall 44 of the rail 22 may also be achieved by raising of the main lever 28. Hence the longitudinal position of seat 12 may be adjusted by raising the main lever 28 whilst the seat back 16 is at a raised, non-tilted, position.

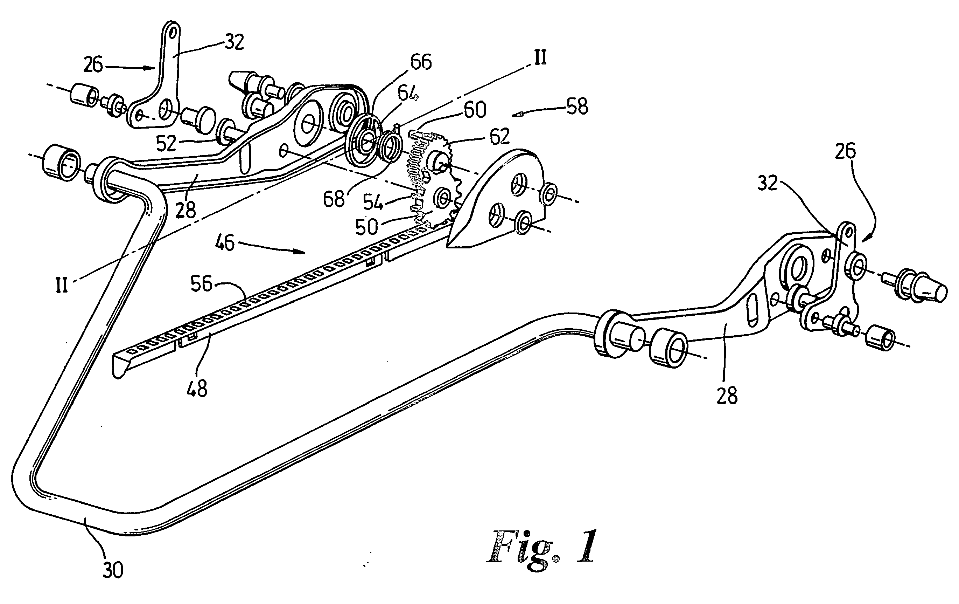

The latching mechanism 24 also includes a rail tracking mechanism 46 (Figure 1) which serves to "memorise" a given longitudinal position along rails 22 and track longitudinal displacement of the seat 12 along rails 22 from the memorised longitudinal position. It thereby enables the longitudinal position of the seat 12 to be adjusted to a desired position using the main lever 28, and thereafter enables the seat 12 to be re-positioned at the desired longitudinal position after completion of a tilt and slide action (initiated by tilting the seat back 16 to its tilted position P_{T}).

The rail tracking mechanism 46 preferably includes a rack 48 which is fixedly mounted on a rail 22 to extend longitudinally along the rail 22.

A drive pinion gear 50 is rotatably mounted on the main lever 28 via a shaft 52.

The drive pinion gear 50 has gear teeth 54 which mesh with a series of recesses 56 spaced along the rack 48.

Accordingly, on moving the seat back 16 to its tilted position P_{T} to initiate a tilt and slide action, longitudinal movement of the seat 12 along the rails 22 causes the pinion gear 50 to rotate.

The pinion gear 50 is arranged to drive a stop assembly 58 which, in one direction of rotation of the pinion gear 50 (the clockwise direction as viewed in Figure 1), defines a limit stop which corresponds to a rotary start position for the pinion gear 50. The pinion gear 50 is biased to rotate in said one direction so that in the event of the pinion gear 50 being disengaged from the rack 48, the pinion gear 50 will rotate under said bias until it reaches the rotary start position.

It will be appreciated that if the seat 12 is located at its rearwardmost longitudinal position and then longitudinally moved to its forwardmost longitudinal position, the pinion gear 50 will be rotated through more than 360° if it has a circumference which is less than the longitudinal distance between the rearwardmost and forwardmost longitudinal positions of the seat 12.

To permit a relatively small diameter pinion gear 50 to be used, it is preferred that the stop assembly 58 includes a stop pin 60 mounted on a driven gear 62. The gear 62 is rotatably driven by a drive gear (not shown) mounted on the pinion gear 50. The drive gear is of smaller diameter than driven gear 62 such that there is a step down in ratio between drive pinion gear 50 and driven gear 62.

The stop pin 60 is received in an arcuate slot 64 carried by a stop plate 66. A spring 68 acts on the driven gear 62 to bias the gear 62 in an anti-clockwise direction and so bias the stop pin 60 into engagement with the anti-clockwise end of arcuate slot 64.

To set the memory position of the seat 12, an operative raises the main lever 28 to disengage the pinion gear 50 from the rack 48. This causes movement of the stop pin 60 to engage the anti-clockwise end of the arcuate slot 64 if it is not already in engagement therewith. Such movement of the pin 60 causes the pinion gear 50 to rotate to its rotary start position.

Movement of the main lever 28 back to its normal position causes the pinion gear 50 to re-engage the rack 48.

If the seat 12 is then moved forwardly when undergoing a tilt and slide action, gear 50 is rotated in an anti-clockwise direction and so causes the stop pin 60 to move away from the anti-clockwise end of the slot 64 by a distance which directly corresponds to the longitudinal distance travelled in the forward direction by seat 12.

When returning the seat 12 in the rearwards direction, pinion gear 50 is rotated in a clockwise direction and returns the stop pin 60 towards the anti-clockwise end of slot 64. When the pin 60 engages the anti-clockwise end of slot 64, further clockwise movement of gear 50 is prevented and so the seat 12 is arrested in the "memorised" longitudinal position (Figure 3d).

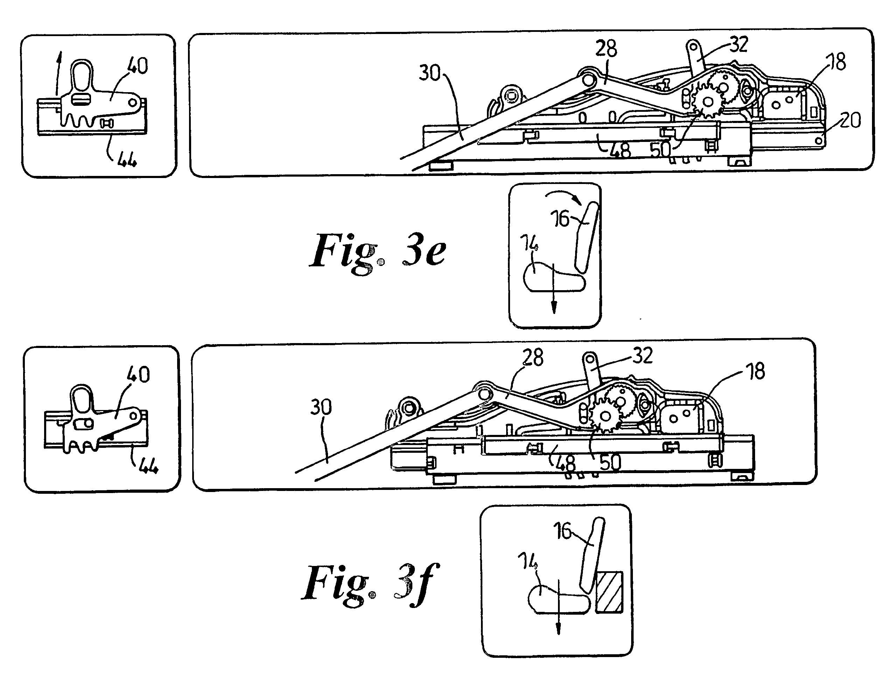

Once the seat 12 is arrested in the "memorised" longitudinal position, movement of the seat back 16 to its seat occupancy position P_{N} causes rotation of lever 26 so that driven arm 3S acts to re-engage the latch member 40 with the bottom wall 44 of rail 22 and thereby latch the seat 12 (Figure 3e).

If an obstruction is located behind the seat 12 (such as a box) while the seat 12 is located in its forwardmost position P_{F}, it may not be possible to return the seat 12 in a rearwards direction a sufficient distance to return the stop pin 60 to the anti-clockwise end of slot 64.

In this situation, the latch member 40 may be re-engaged with the bottom wall 44 of rail 22 by moving the seat back 16 to its seat occupancy position P_{N} and thereby causing rotation of lever 26 (Figure 3f). Longitudinal movement between the slide member 20 and the rail 22 is then prevented. However, in this situation the stop pin 60 is not located at the anti-clockwise end of slot 64.

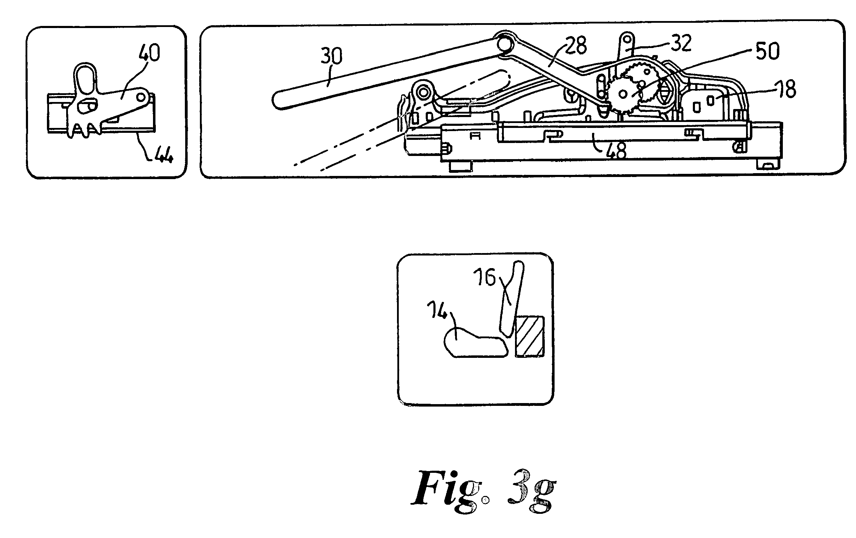

In order to re-set the memory position of the seat 12 in this situation, an operative raises the main lever 28 to disengage the pinion gear 50 from the rack 48. This causes movement of the stop pin 60 to engage the anti-clockwise end of the arcuate slot 64 (Figure 3g). As indicated previously, such movement of the pin 60 causes the pinion gear 50 to rotate to its rotary start position.

Preferably the slugs of the inter-engaging teeth on the pinion gear 50 and rack 48 are chosen to cause the pinion gear 50 to rise out of contact with the teeth on the rack 48 in the event of a load above a predetermined amount being applied when moving the seat 12 in the rearwards direction. This facility is advantageous as it provides an over-run capability to protect damage to the stop mechanism in the event of the seat being moved backwards too quickly or in an aggressive manner.

Although a pinion gear 50 and rack 48 have been described, it will be appreciated that other forms of co-operating drive assemblies may be used to achieve the same function, e.g. a friction wheel engaging with a friction surface.

## Claims

1. A vehicle seat assembly (10) including a seat (12) slidably connected to at least one rail (22) for longitudinal movement along the rail (22) between a rearwardmost position and a forwardmost position, the seat having a seat cushion (14) and a seat back (16) which is pivotally movable relative to the seat cushion (14) from a seat occupancy position (P_{N}) to a forwardly tilted position (P_{T}), a rail latching mechanism (24) mounted on the seat cushion (14) for co-operation with the rail (22) in order to latchingly locate the seat (12) at a selected desired longitudinal position along the rail (22) and a rail tracking mechanism (46) mounted on the seat cushion (14) for co-operation with the rail (22) to track the longitudinal displacement of the seat (12) along the rail (22) from a pre-selected desired longitudinal position of the seat (12) on the rail (22) the latching mechanism (24) including latch means (40) engageable with the rail (22) to latch the seat (12) in said selected desired longitudinal position, the latch means (40) being operably connected to the seat back (16) to selectively engage and disengage the latch means (40) from the rail (22) on movement of the seat back (16), between its seat occupancy position (P_{N}) and its forwardly tilted position (P_{T}) regardless of the longitudinal position of the seat (12), movement of the seat back (16) from its seat occupancy position (P_{N}) to its forwardly tilted position (P_{T}) disengaging the latch means (40) from the rail (22) so as to enable the seat (12) to be longitudinally moved forwardly from the pre-selected longitudinal position to a temporary forward longitudinal position, the tracking mechanism (46), including a drive member (50) in driving engagement with the rail (22) so as to be driven by forward and rearward longitudinal displacement of the seat (12) between its pre-selected and temporary forward longitudinal positions, and a release mechanism (26) mounted on the seat cushion (14) which is movable from a normal operable position to a release position, the release mechanism (26) when in its normal operable position acting to maintain driving engagement between the drive member (50) and the rail (22) and also maintain said latch means (40) in engagement with the rail (22) until actuated to disengage by movement of said seat back (16), the release member when moved to its release position acting to simultaneously disengage the latch means (40) from the rail (22) to enable the seat (12) to be longitudinally moved to a new pre-selected desired longitudinal position and disengage the drive member (50) from the rail to re-set the tracking mechanism for memorising the new pre-selected desired longitudinal position of the seat.

2. A vehicle seat assembly (10) according to Claim 1 wherein the release mechanism (26) includes a main support lever (28) pivotally mounted on the seat cushion for pivotal movement between said normal operable position and said release position, said latch means (40) and said drive member (50) being mounted on said support lever.

3. A vehicle seat assembly (10) according to Claim 1 or Claim 2 wherein the tracking mechanism (46) further includes a movable stop mounted on a driven member, which is drivingly connected to said drive member, and a fixed stop against which the movable stop abuts in order to define a limit position for said drive member, which corresponds to said pre-selected desired longitudinal position of the seat.

4. A vehicle seat assembly (10) according to Claim 3 wherein the drive and driven members are toothed gears in meshing engagement.

5. A vehicle seat assembly (10) according to Claim 4 wherein the relative size of said gears defines a reduction drive ratio between the drive and driven members.

6. A vehicle seat assembly (10) according to any preceding claim wherein the tracking mechanism (46) includes a rack (48) mounted on the rail (22) and the drive member (50) is a toothed wheel meshingly engaged with the rack (48).

7. A vehicle seat assembly (10) according to Claim 6 wherein the shape of the teeth of the toothed wheel and rack (48) are such as to cause dis-engagement of the wheel from the rack (48) in the event that the seat (12) is exposed to a force in excess of a predetermined force when being moved rearwardly from its temporary forward longitudinal position to its pre-selected desired longtiudinal position.

## Patentansprüche

1. Fahrzeugsitzanordnung (10) mit einem Sitz (12), der mit mindestens einer Schiene (22) zur Längsbewegung entlang der Schiene (22) zwischen einer hintersten Position und einer vordersten Position gleitend verbunden ist, wobei der Sitz ein Sitzkissen (14) und eine Rückenlehne (16) hat, die schwenkbar bezüglich des Sitzkissens (14) aus einer Sitzeinnahmeposition (P_{N}) in eine nach vorne gekippte Position (P_{T}) beweglich ist, einem Schienenrastmechanismus (24), der zum Zusammenwirken mit der Schiene (22) am Sitzkissen (14) montiert ist, um den Sitz (12) an einer gewählten Soll-Längsposition entlang der Schiene (22) rastend zu lokalisieren, und einem Schienennachführmechanismus (46), der am Sitzkissen (14) zum Zusammenwirken mit der Schiene (22) montiert ist, um die Längsverschiebung des Sitzes (12) entlang der Schiene (22) aus einer vorgewählten Soll-Längsposition des Sitzes (12) auf der Schiene (22) nachzuführen, wobei der Rastmechanismus (24) ein Rastmittel (40) aufweist, das mit der Schiene (22) in Eingriff gebracht werden kann, um den Sitz (12) in der gewählten Soll-Längsposition zu verrasten, wobei das Rastmittel (40) betriebsmäßig mit der Rückenlehne (16) verbunden ist, um das Rastmittel (40) gezielt mit der Schiene (22) in Eingriff zu bringen und daraus auszurücken, wenn die Rückenlehne (16) zwischen der Sitzeinnahmeposition (P_{N}) und ihrer nach vorne gekippten Position (P_{T}) bewegt wird, unabhängig von der Längsposition des Sitzes (12), wobei das Rastmittel (40) durch eine Bewegung der Rückenlehne (16) aus ihrer Sitzeinnahmeposition (P_{N}) in ihre nach vorne gekippte Position (P_{T}) aus der Schiene (22) ausgerückt wird, damit der Sitz (12) aus der vorgewählten Längsposition in eine vorübergehende vorwärtige Längsposition in Längsrichtung nach vorne bewegt werden kann, wobei der Nachführmechanismus (46) ein Antriebselement (50) aufweist, das in Antriebseingriff mit der Schiene (22) steht, so dass es durch Längsverschiebung nach vorne und hinten des Sitzes (12) zwischen seiner vorgewählten und seiner vorübergehenden vorwärtigen Längsposition angetrieben wird, und einem am Sitzkissen (14) montierten Freigabemechanismus (26), der aus einer normalen Betriebsposition in eine Freigabeposition bewegt werden kann und der, wenn er in seiner normalen Betriebsposition ist, so wirkt, dass er Antriebseingriff zwischen dem Antriebselement (50) und der Schiene (22) aufrechterhält sowie das Rastmittel (40) so lange mit der Schiene (22) in Eingriff hält, bis er durch Bewegung der Rückenlehne (16) zum Ausrücken betätigt wird, wobei das Freigabeelement so wirkt, wenn es in seine Freigabeposition bewegt wird, dass es gleichzeitig das Rastmittel (40) aus der Schiene (22) ausrückt, damit der Sitz (12) in Längsrichtung in eine neue vorgewählte Soll-Längsposition bewegt werden kann, und das Antriebselement (50) aus der Schiene ausrückt, um den Nachführmechanismus zur Speicherung der neuen vorgewählten Soll-Längsposition des Sitzes rückzusetzen.

2. Fahrzeugsitzanordnung (10) nach Anspruch 1, wobei der Freigabemechanismus (26) einen Hauptstützhebel (28) aufweist, der für eine Schwenkbewegung zwischen der normalen Betriebsposition und der Freigabeposition schwenkbar am Sitzkissen montiert ist, wobei das Rastmittel (40) und das Antriebselement (50) am Stützhebel montiert sind.

3. Fahrzeugsitzanordnung (10) nach Anspruch 1 oder 2, wobei der Nachführmechanismus (46) ferner einen beweglichen Anschlag, der an einem angetriebenen Element montiert ist, das antriebsmäßig mit dem Antriebselement verbunden ist, und einen feststehenden Anschlag aufweist, an den der bewegliche Anschlag anschlägt, um eine Grenzposition für das Antriebselement zu definieren, die der vorgewählten Soll-Längsposition des Sitzes entspricht.

4. Fahrzeugsitzanordnung (10) nach Anspruch 3, wobei es sich bei dem Antriebs- und dem angetriebenen Element um Zahnräder in kämmendem Eingriff handelt.

5. Fahrzeugsitzanordnung (10) nach Anspruch 4, wobei die relative Größte der Zahnräder ein Untersetzungsverhältnis zwischen dem Antriebs- und dem angetriebenen Element definiert.

6. Fahrzeugsitzanordnung (10) nach einem der vorhergehenden Ansprüche, wobei der Nachführmechanismus (46) eine an der Schiene (22) montierte Zahnstange (48) aufweist und es sich bei dem Antriebselement (50) um ein mit der Zahnstange (48) in kämmendem Eingriff stehendes Zahnrad handelt.

7. Fahrzeugsitzanordnung (10) nach Anspruch 6, wobei die Form der Zähne des Zahnrads und der Zahnstange (48) derart ist, dass das Ausrücken des Rades aus der Zahnstange (48) bewirkt wird, wenn der Sitz (12) einer eine vorbestimmte Kraft übersteigenden Kraft ausgesetzt wird, wenn er aus seiner vorübergehenden vorwärtigen Längsposition in seine vorgewählte Soll-Längsposition nach hinten bewegt wird.

## Revendications

1. Ensemble de siège de véhicule (10) incluant un siège (12) raccordé, pour coulisser, à au moins un rail (22) permettant un mouvement longitudinal le long du rail (22) entre une position située le plus en arrière et une position située le plus en avant, le siège ayant un coussin de siège (14), et un dossier de siège (16) qui peut se déplacer en pivotement par rapport au coussin de siège (14) à partir d'une position d'occupation du siège (P_{N}) vers une position basculée vers l'avant (P_{T}), un mécanisme d'encliquètement du rail (24) monté sur le coussin de siège (14) pour une coopération avec le rail (22) afin de positionner par encliquètement le siège (12) dans une position longitudinale souhaitée et sélectionnée le long du rail (22), et un mécanisme de suivi du rail (46) monté sur le coussin de siège (14) pour une coopération avec le rail (22), afin de suivre le déplacement longitudinal du siège (12) le long du rail (22) à partir d'une position longitudinale souhaitée et présélectionnée du siège (12) sur le rail (22), le mécanisme d'encliquètement (24) incluant un moyen de cliquet (40) qui peut s'engager avec le rail (22) pour encliqueter le siège (12) dans ladite position longitudinale souhaitée et sélectionnée, les moyens d'encliquètement (40) étant fonctionnellement raccordés au dossier de siège (16) pour sélectivement engager avec le rail (22) et désengager du rail le moyen d'encliquètement (40) lors du déplacement du dossier de siège (16) entre sa position d'occupation de siège (P_{N}) et sa position basculée vers l'avant (P_{T}), quelle que soit la position longitudinale du siège (12), le mouvement du dossier de siège (16) depuis sa position d'occupation de siège (P_{N}) vers sa position basculée vers l'avant (P_{T}) désengageant le moyen d'encliquètement (40) du rail (22) de façon à permettre que le siège (12) soit déplacé longitudinalement vers l'avant à partir de la position longitudinale présélectionnée vers une position temporaire longitudinale avant, le mécanisme de suivi (46) incluant un organe d'entraînement (50) en engagement d'entraînement avec le rail (22), de façon à être entraîné par un déplacement longitudinal vers l'avant et vers l'arrière du siège (12) entre ses positions longitudinales temporaire avant et présélectionnée, et un mécanisme de libération (26) monté sur le coussin de siège (14), qui est mobile depuis une position de fonctionnement normal vers une position de libération, ledit mécanisme de libération (26), lorsqu'il se trouve dans sa position normale de fonctionnement, agissant pour maintenir l'engagement d'entraînement entre l'organe d'entraînement (50) et le rail (22) et pour également maintenir le moyen d'encliquètement (40) en engagement avec le rail (22) jusqu'à ce qu'il soit actionné pour désengager, par un mouvement du dossier de siège (16), l'organe de libération lorsqu'il se déplace vers sa position de libération en agissant pour désengager simultanément le moyen d'encliquètement (40) du rail (22), afin de permettre que le siège (12) soit déplacé longitudinalement jusqu'à une position longitudinale présélectionnée et nouvelle, et désengage l'organe d'entraînement (50) du rail pour réinitialiser le mécanisme de suivi afin de mémoriser la nouvelle position longitudinale souhaitée et présélectionnée du siège.

2. Ensemble de siège de véhicule (10) selon la revendication 1, dans lequel le mécanisme de libération (26) inclut un levier de support principal (28) monté pour pivoter sur le coussin de siège pour permettre un mouvement de pivotement entre ladite position de fonctionnement normale et ladite position de libération, ledit mécanisme d'encliquètement et ledit organe d'entraînement (50) étant montés sur ledit levier de support.

3. Ensemble de siège de véhicule (10) selon la revendication 1 ou la revendication 2, dans lequel le mécanisme de suivi (46) inclut en outre une butée mobile montée sur un organe entraîné qui est connecté en entraînement audit organe d'entraînement, et une butée fixe contre laquelle la butée mobile bute afin de définir une position limite pour ledit organe d'entraînement qui correspond à ladite position longitudinale souhaitée présélectionnée du siège.

4. Ensemble de siège de véhicule (10) selon la revendication 3, dans lequel les organes d'entraînement et entraînés possèdent des engrenages à dents en engagement d'engrènement.

5. Ensemble de siège de véhicule (10) selon la revendication 4, dans lequel la dimension relative desdits engrenages définit un rapport de réduction d'entraînement entre les organes d'entraînement et entraînés.

6. Ensemble de siège de véhicule (10) selon l'une quelconque des revendications précédentes, dans lequel le mécanisme de suivi (46) inclut une crémaillère (48) montée sur le rail (22), et l'organe d'entraînement (50) est une roue dentée engagée par engrènement avec la crémaillère (48).

7. Ensemble de siège de véhicule (10) selon la revendication 6, dans lequel la forme des dents de la roue dentée et de la crémaillère (48) est telle qu'elle provoque un désengagement de la roue de la crémaillère (48) lorsque le siège (12) est soumis à une force supérieure à une force prédéterminée, lorsqu'il est déplaçé vers l'arrière à partir de sa position longitudinale temporaire avant vers sa position longitudinale souhaitée et présélectionnée.
